# EUROPEAN PATENT APPLICATION

(11) **EP 2 514 724 A2**
(43) Date of publication of application: **24.10.2012**
(21) Application number: 12164243.3
(22) Date of filing: 16.04.2012
(51) Int. Cl.: C03C 17/23, C03C 17/34

(54) **Thermochromic substrate and pair-glass with thermochromic thin film**

(30) Priority: 18.04.2011 KR 20110035789
(71) Applicant: Samsung Corning Precision Materials Co., Ltd., Gyeongsangbuk-do Gumi-si, 730-735 (KR)
(72) Inventor: Moon, Donggun, Asan-si ChungCheongNam-Do 336-841 (KR); Kim, Du Hwan, Asan-si ChungCheongNam-Do 336-841 (KR); Kim, A-Ra, Asan-si ChungCheongNam-Do 336-841 (KR); Kim, Hyunbin, Asan-si ChungCheongNam-Do 336-841 (KR); Shim, Myungi, Asan-si ChungCheongNam-Do 336-841 (KR); Jung, Youngsoo, Asan-si ChungCheongNam-Do 336-841 (KR); Jung, Yung-Jin, Asan-si ChungCheongNam-Do 336-841 (KR); Choi, Yongwon, Asan-si ChungCheongNam-Do 336-841 (KR)
(74) Representative: Gulde Hengelhaupt Ziebig & Schneider

(57) **Abstract**

A thermochromic substrate and a pair-glass with a thermochromic thin film, which increases the efficiency with which solar energy is transmitted and blocked. The thermochromic substrate includes a base substrate, a thermochromic thin film coating the base substrate, and a high-refractivity thin film coating the thermochromic thin film. The high-refractivity thin film shifts the reference wavelength in the infrared range, at which the variance in the transmittance due to the phase transition does not exceed 0, to a shorter wavelength. The efficiency with which solar energy is transmitted and blocked is increased, thereby decreasing the load of cooling and heating a building.

## Description

### CROSS REFERENCE TO RELATED APPLICATION

The present application claims priority from Korean Patent Application Number 10-2011-0035789 filed on April 18, 2011, the entire contents of which application are incorporated herein for all purposes by this reference.

### BACKGROUND OF THE INVENTION

### Field of the Invention

The present invention relates to a thermochromic substrate and a pair-glass with a thermochromic thin film, and more particularly, to a thermochromic substrate and a pair-glass with a thermochromic thin film, which increases the efficiency with which solar energy is transmitted and blocked.

### Description of Related Art

In response to soaring prices of chemical energy sources such as petroleum, the necessity for the development of new energy sources is increasing. In addition, the importance of energy saving technologies is increasing in line with the necessity for new energy sources. In fact, at least 60% of energy consumption in common houses is attributed to heating and/or cooling. In particular, common houses and buildings lose up to 24% of their energy through windows.

Accordingly, a variety of attempts has been made in order to reduce the amount of energy that is lost through windows by increasing the airtightness and insulation characteristics thereof while maintaining the aesthetics and view characteristics, which are the basic functions of windows. Representative methods, by way of example, include varying the size of windows and furnishing high-insulation windows.

Types of high insulation window glass include an argon (Ar) injected pair-glass, in which Ar gas or the like is disposed between a pair of glass panes in order to prevent heat exchange, low-e glass, and the like. Also being studied is a type of glass that is coated with a layer that has specific thermal characteristics in order to adjust the amount of solar energy that is introduced.

In particular, in the low-e glass, glass is coated with thin layers of metal and metal oxide, which allows most visible light that is incident on the window to enter, so that the interior of a room can be maintained bright, while radiation in the infrared (IR) range can be blocked. The effects of this glass are that it prevents the heat from leaking to the outside, and also prevents the energy of heat outside a building from entering, thereby reducing cooling and heating bills. However, this window has the following drawbacks due to its characteristic of reflecting wavelengths other than visible light. Specifically, it does not admit the IR range of sunlight into the interior of a room, which is a drawback especially in winter, and the transmittance of sunlight is not adjusted according to the season (temperature).

Accordingly, the development of a technology for improving energy efficiency by coating a glass with a vanadium dioxide (VO₂) thin film, which can selectively transmit or block infrared (IR) rays, which have a strong thermal effect, is underway. However, there is a problem in that the efficiency with which the VO₂ thin film transmits and blocks solar energy is low.

The information disclosed in this Background of the Invention section is only for the enhancement of understanding of the background of the invention, and should not be taken as an acknowledgment or any form of suggestion that this information forms a prior art that would already be known to a person skilled in the art.

### BRIEF SUMMARY OF THE INVENTION

Various aspects of the present invention provide a thermochromic substrate and a pair-glass with a thermochromic thin film, in which the efficiency with which solar energy is transmitted and blocked is increased by coating the thermochromic thin film with a high-refractivity thin film, which shifts a reference wavelength at which the variance in the transmittance of the thermochromic substrate due to phase transition of the thermochromic thin film (the transmittance after the phase transition - the transmittance before the phase transition) does not exceed zero (0), to a shorter wavelength.

In an aspect of the present invention, provided is a thermochromic substrate that includes a base substrate, a thermochromic thin film coating the substrate, and a high-refractivity thin film coating the thermochromic thin film. The high-refractivity thin film shifts the reference wavelength in the infrared range, at which a transmittance of the thermochromic substrate after phase transition of the thermochromic thin film is not exceed a transmittance of the thermochromic substrate before the phase transition of the thermochromic thin film, to a shorter wavelength.

In an embodiment, the thermochromic thin film may be a vanadium dioxide (VO₂) thin film, and the high-refractivity thin film may be a thin film that has a refractive index ranging from 1.7 to 2.7.

Here, the optical thickness of the high-refractivity thin film may range from 0.25 to 0.8, and preferably from 0.5 to 0.8.

In another aspect of the present invention, also provided is an energy-saving pair-glass that includes a first glass substrate and a second glass substrate being spaced apart from the first glass substrate and having a coating section, preferably, on a surface facing the first glass substrate. The coating section includes a thermochromic thin film, which coats the second glass substrate, and a high-refractivity thin film, which coats at least one of both surfaces of the thermochromic thin film. The high-refractivity thin film shifts the reference wavelength in an infrared range to a shorter wavelength. At the reference wavelength, a transmittance of the thermochromic substrate after phase transition of the thermochromic thin film is not exceed a transmittance of the thermochromic substrate before the phase transition of the thermochromic thin film.

In an embodiment, the thermochromic thin film may be made of one selected from the group consisting of vanadium dioxide (VO₂), titanium oxide (Ti₂O₃), niobium dioxide (NbO₂), and nickel sulfide (NiS).

In an embodiment, the high-refractivity thin film may be made of one selected from the group consisting of zinc oxide (ZnO), titanium dioxide (IV) (TiO₂), zirconia (ZrO₂), hafnium oxide (HfO₂) and antimony trioxide (Sb₂O₃).

In an embodiment, the high-refractivity thin film may be a thin film that has a refractive index ranging from 1.7 to 2.7.

In an embodiment, the optical thickness of the high-refractivity thin film may range from 0.25 to 0.8, and preferably from 0.5 to 0.8.

According to embodiments of the invention, it is possible to increase the efficiency with which solar energy is transmitted and blocked by coating the thermochromic thin film. The solar transmittance of the thermochromic substrate is adjusted depending on the outside atmosphere, thereby decreasing the load of cooling and heating a building.

The methods and apparatuses of the present invention have other features and advantages which will be apparent from, or are set forth in greater detail in the accompanying drawings, which are incorporated herein, and in the following Detailed Description of the Invention, which together serve to explain certain principles of the present invention.

### BRIEF DESCRIPTION OF THE DRAWINGS

FIG. 1 is a schematic cross-sectional view depicting a thermochromic substrate with a thermochromic thin film according to an embodiment of the invention;

FIG. 2 is a graph depicting the transmittance of the thermochromic substrate with a thermochromic thin film according to an embodiment of the invention, depending on the wavelength; and

FIG. 3 is a schematic cross-sectional view depicting an energy-saving pair-glass according to an embodiment of the invention.

### DETAILED DESCRIPTION OF THE INVENTION

Reference will now be made in detail to various embodiments of the present invention, examples of which are illustrated in the accompanying drawings and described below, so that a person having ordinary skill in the art to which the present invention relates can easily put the present invention into practice.

In the following description of the present invention, detailed descriptions of known functions and components incorporated herein will be omitted when they may make the subject matter of the present invention unclear.

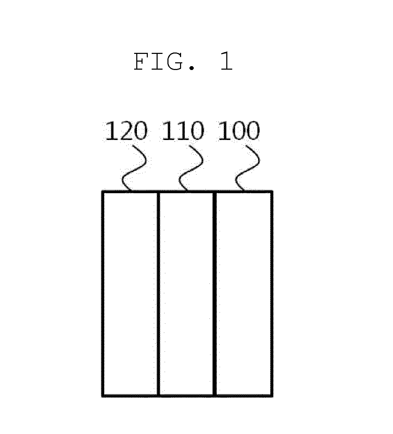

FIG. 1 is a schematic cross-sectional view depicting an energy-saving window, that is, a thermochromic substrate, according to an embodiment of the invention.

Referring to FIG. 1, a thermochromic substrate with a thermochromic thin film according to an embodiment of the invention includes a base substrate 100, a thermochromic thin film 110 coating the substrate 100, and a high-refractivity thin film 120 coating the thermochromic thin film 110. The high-refractivity thin film 120 serves to shift the reference wavelength, at which a transmittance of the thermochromic substrate after phase transition of the thermochromic thin film is not exceed a transmittance of the thermochromic substrate before the phase transition of the thermochromic thin film, to a shorter wavelength.

The base substrate 100 is a transparent or colored substrate that has a predetermined area and a predetermined thickness and is coated with the thermochromic thin film 110. It is preferred that the base substrate 100 be made of a sodalime glass substrate.

The thermochromic thin film 110 is formed by coating the base substrate 100 with a material that causes a thermochromic phenomenon in order to control the amount of sunlight that is incident on the base substrate 100 through the thermochromic thin film 110. The thermochromic material changes its color at a given temperature. Specifically, the crystalline structure of the thermochromic material changes due to the thermochromic phenomenon and thereby its physical properties (such as electrical conductivity and infrared (IR) transmittance) rapidly change. Therefore, the coating of the base substrate with the thermochromic material can achieve the effect of blocking IR rays while allowing visible light to enter at the given temperature or higher.

Here, the thermochromic film 110 may be made of one selected from among, but not limited to, vanadium dioxide (VO₂), titanium oxide (III) (Ti₂O₃), niobium dioxide (NbO₂), and nickel sulfide (NiS).

The high-refractivity thin film 120 is formed by coating the thermochromic thin film 110 with a high-refractivity material in order to increase the ability of the thermochromic thin film 110 to admit or block solar energy.

Since the high-refractivity thin film 120 formed on the thermochromic thin film 110 changes the wavelength and transmittance of sunlight that is incident on the thermochromic thin film 110, the reference wavelength, at which the variance in the transmittance of the thermochromic substrate due to phase transition (the transmittance after the phase transition - the transmittance before the phase transition) does not exceed 0, can be shifted to a shorter wavelength, preferably, to a wavelength of 800nm.

Accordingly, in a wavelength range from 800nm to 1700nm, within which the efficiency with which solar energy is transmitted or blocked is high, the variance in the transmittance of the thermochromic substrate due to the phase transition of the thermochromic thin film can be made greater than the variance in the transmittance of the thermochromic single-layer thin film, thereby decreasing the load of cooling and heating a building.

In solar spectrum, the ratio of the visible light to the IR range is about 50:50. Subdividing the IR range, light ranging from 800nm to 1300nm is about 36%, light ranging from 1300nm to 1700nm is about 9%, and light ranging from 1700nm to 2500nm is about 5%. Accordingly, it is possible to increase the difference between transmittances in the wavelength range from 800nm to 1700nm due to phase transition by changing the transmittable wavelength and transmittance of the thermochromic thin film by coating it with the high-refractivity thin film. This can consequently increase the efficiency with which solar energy is transmitted and blocked.

Here, the high-refractivity thin film 120 may be made of one selected from among, but not limited to, zinc oxide (ZnO), titanium dioxide (IV) (TiO₂), zirconia (ZrO₂), hafnium oxide (HfO₂) and antimony trioxide (Sb₂O₃).

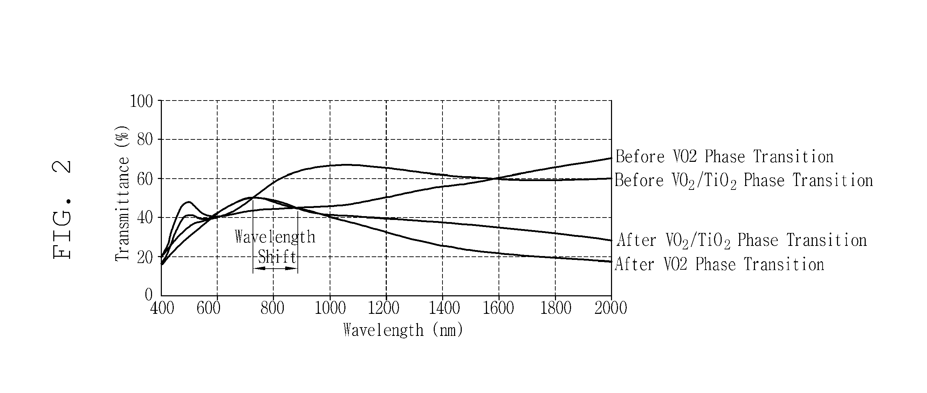

FIG. 2 is a graph depicting the transmittance of the thermochromic substrate with a thermochromic thin film according to an embodiment of the invention, depending on the wavelength.

Referring to FIG. 2, the reference wavelength, at which the variance in transmittance due to the phase transition does not exceed 0, is 900nm for a window that has a VO₂ single thin film and 750nm for a window that has a VO₂ thin film and a TiO₂ high-refractivity thin film according to an embodiment of the invention. It can be appreciated that the reference wavelength, at which the variance in transmittance due to the phase transition does not exceed 0, is shifted from 900nm to 750nm.

In addition, when the thermochromic thin film 110 is a VO₂ thin film, it is preferred that the refractive index of the high-refractivity thin film range from 1.7 to 2.7.

Table 1 presents changes in the transmittance of glass coated with a VO₂ single thin film and the transmittance of glass that has a VO₂ thin film and a TiO₂ coating on the VO₂ thin film before and after phase transition.

**Table 1**

| | Transmittance of sunlight (%) | | Transmittance of visible light (%) | |
|---|---|---|---|---|
| | Before phase transition | After phase transition | Before phase transition | After phase transition |
| VO₂ single film | 40.8 | 35.2 | 37.8 | 36.6 |
| VO₂/TiO₂ film | 49.3 | 38.6 | 41.7 | 40.1 |

As presented in Table 1 above, it can be appreciated that the window that has the VO₂/TiO₂ film exhibits an increase in the transmittance of visible light of about 3% over the window that has the VO₂ single thin film, and that it exhibits an increase in the difference in the transmittance of sunlight before and after phase transition. Therefore, it can be understood that the efficiency with which solar energy is transmitted and blocked is increased by coating the thermochromic thin film with the high-refractivity thin film.

Table 2 below presents transmittance and reflectivity before and after phase transition depending on the optical thicknesses of Ti02, which coats a V02 thin film having a thickness of 45nm.

**Table 2**

| | Before phase transition | | | | After phase transition | | | |
|---|---|---|---|---|---|---|---|---|
| | 500nm | | 1000nm | | 500nm | | 1000nm | |
| OT¹ | Refl² (%) | Trans³ (%) | Refl² (%) | Trans³ (%) | Refl² (%) | Trans³ (%) | Refl² (%) | Trans³ (%) |
| 0 | 36.3 | 35.9 | 32.8 | 45.0 | 34.9 | 30.4 | 21.7 | 39.6 |
| 0.1 | 18.1 | 46.1 | 34.2 | 44.1 | 15.3 | 39.4 | 14.7 | 43.1 |
| 0.2 | 1.8 | 55.3 | 31.4 | 45.9 | 2.4 | 45.5 | 7.9 | 46.6 |
| 0.25 | 8.2 | 51.6 | 28.6 | 47.9 | 10.5 | 41.7 | 5.6 | 47.7 |
| 0.3 | 20.2 | 44.9 | 24.8 | 50.4 | 22.5 | 36.1 | 4.6 | 48.3 |
| 0.4 | 37.0 | 35.4 | 15.1 | 56.9 | 37.4 | 29.2 | 6.9 | 47.1 |
| 0.5 | 35.0 | 36.5 | 5.7 | 63.2 | 33.4 | 31.0 | 13.4 | 43.8 |
| 0.6 | 15.1 | 47.7 | 2.0 | 65.7 | 12.5 | 40.76 | 20.6 | 40.2 |
| 0.7 | 2.4 | 54.8 | 6.6 | 62.6 | 3.5 | 44.9 | 25.9 | 37.5 |
| 0.75 | 10.8 | 50.1 | 11.2 | 59.5 | 13.3 | 40.4 | 27.5 | 36.7 |
| 0.8 | 23.0 | 43.3 | 16.3 | 56.1 | 25.1 | 34.8 | 28.3 | 36.3 |
| 0.9 | 37.7 | 35.0 | 25.7 | 49.8 | 37.9 | 28.9 | 27.3 | 36.7 |

| | | | | | | | | |
|---|---|---|---|---|---|---|---|---|
| Notes) OT¹: optical thickness, Refl²: reflectivity, Trans³: Transmittance | | | | | | | | |

As presented in Table 2 above, it can be appreciated that the difference in the transmittance before and after phase transition is great when the optical thickness of the high-refractivity thin film ranges from 0.25 to 0.8, and preferably from 0.5 to 0.8.

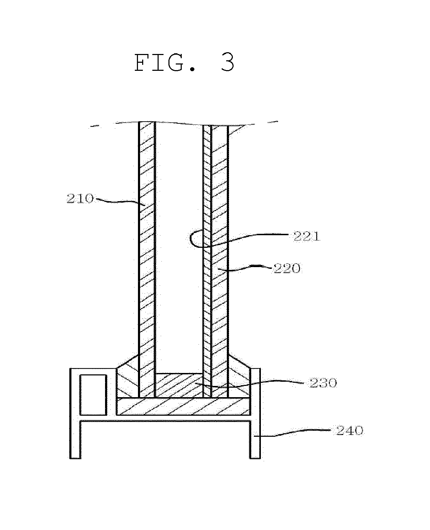

FIG. 3 is a schematic cross-sectional view depicting an energy-saving pair-glass according to an embodiment of the invention.

Referring to FIG. 3, the energy-saving pair-glass of this embodiment includes a first glass substrate 210 and a second glass substrate 220 having a coating section 221 on the surface that faces the first glass substrate 210. The second glass substrate 220 is spaced apart from the first glass substrate 210. A spacer 230 is disposed between the first glass substrate 210 and the second glass substrate 220 in order to maintain the interval between the first and second glass substrates 210 and 220. The coating section 221 may include a VO₂ thin film, which coats the second glass substrate 220, and a high-refractivity thin film, which coats the VO₂ thin film. The high-refractivity thin film serves to shift the reference wavelength in the IR range, at which the variance in the transmittance due to the phase transition does not exceed 0, to a shorter wavelength.

As described above, the pair-glass of this embodiment is hermetically fixed to a window frame (or doorframe) 240. Accordingly, the pair-glass of this embodiment can realize high efficiency in the transmission and blocking of solar energy, and its characteristics, such as soundproofing, protection from wind, and protection from heat, can be better than those of a single layer of glass.

Here, the high-refractivity thin film may be made of one selected from among, but not limited to, zinc oxide (ZnO), titanium dioxide (IV) (TiO₂), zirconia (ZrO₂), hafnium oxide (HfO₂) and antimony trioxide (Sb₂O₃).

In addition, the high-refractivity thin film may have a refractive index ranging from 1.7 to 2.7, and the thickness of the high-refractivity thin film may range from 0.25 to 0.8, preferably, from 0.5 to 0.8.

The thermochromic substrate with the thermochromic thin film according to an embodiment of the invention may include a plurality of thermochromic thin films and a plurality of high-refractivity thin films alternating with each other.

The foregoing descriptions of specific exemplary embodiments of the present invention have been presented with respect to the certain embodiments and drawings. They are not intended to be exhaustive or to limit the invention to the precise forms disclosed, and obviously many modifications and variations are possible for a person having ordinary skill in the art in light of the above teachings.

It is intended therefore that the scope of the invention not be limited to the foregoing embodiments, but be defined by the Claims appended hereto and their equivalents.

## Claims

1. A thermochromic substrate comprising:
a base substrate;
a thermochromic thin film coating the base substrate;
and
a high-refractivity thin film coating at least one of both surfaces of the thermochromic thin film,
wherein the high-refractivity thin film shifts a reference wavelength in an infrared range in which a transmittance of the thermochromic substrate after phase transition of the thermochromic thin film is not exceed a transmittance of the thermochromic substrate before the phase transition of the thermochromic thin film, to a shorter wavelength.

2. The thermochromic substrate of claim 1, wherein the thermochromic thin film comprises one selected from the group consisting of vanadium dioxide (VO₂), titanium oxide (Ti₂O₃), niobium dioxide (NbO₂), and nickel sulfide (NiS).

3. The thermochromic substrate according to any one of the preceding claims, wherein the high-refractivity thin film comprises one selected from the group consisting of zinc oxide (ZnO), titanium dioxide (IV) (TiO₂), zirconia (ZrO₂), hafnium oxide (HfO₂) and antimony trioxide (Sb₂O₃).

4. The thermochromic substrate according to any one of the preceding claims, wherein the thermochromic thin film comprises vanadium dioxide (VO₂), and the high-refractivity thin film has a refractive index ranging from 1.7 to 2.7.

5. The thermochromic substrate according to any one of the preceding claims, wherein the high-refractivity thin film has an optical thickness ranging from 0.25 to 0.8.

6. The thermochromic substrate according to any one of the preceding claims, wherein the high-refractivity thin film has an optical thickness ranging from 0.5 to 0.8.

7. The thermochromic substrate according to any one of the preceding claims, wherein the high-refractivity thin film increases a difference in transmittance of the thermochromic substrate before and after phase transition of the thermochromic thin film in a negative direction at a wavelength ranging from 800nm to 1700nm.

8. The thermochromic substrate according to any one of the preceding claims, wherein the base substrate comprises a glass substrate.

9. The thermochromic substrate according to any one of the preceding claims, wherein the base substrate, the thermochromic thin film and the high-refractivity thin film are formed in this sequence.

10. The thermochromic substrate according to any one of the preceding claims, comprising a plurality of the thermochromic thin films and a plurality of the high-refractivity thin films, each thermochromic thin film and each high-refractivity thin film being formed alternating with each other.

11. An energy-saving pair-glass comprising:
a glass substrate; and
a thermochromic substrate according to any one of claims 1 to 10, wherein the thermochromic substrate is spaced apart from the glass substrate, and wherein
a coating comprising the thermochromic thin film coating and the high-refractivity thin film coating is arranged on a surface of the base substrate which faces the glass substrate.
